# EUROPÄISCHE PATENTSCHRIFT

(11) **EP 1 333 211 B1**
(45) Veröffentlichungstag und Bekanntmachung des Hinweises auf die Patenterteilung: **05.10.2005**
(21) Anmeldenummer: 02028622.5
(22) Anmeldetag: 20.12.2002
(51) Int. Cl.: F16L 11/04, F16L 9/12

(54) **Mehrschichtiges Rohr**
Multilayer pipe
Tube multicouche

(30) Priorität: 30.01.2002 DE 10203626
(43) Veröffentlichungstag der Anmeldung: 06.08.2003
(73) Patentinhaber: VERITAS AG, 63571 Gelnhausen (DE)
(72) Erfinder: Seyler, Andreas, 63584 Gründau-Lieblos (DE); Schieb, Michael, 63825 Schöllkrippen (DE); Ehret, Martin, 63579 Freigericht (DE); Desch, Thorsten, 63571 Gelnhausen-Höchst (DE)
(74) Vertreter: Grünecker, Kinkeldey, Stockmair & Schwanhäusser Anwaltssozietät

(56) Entgegenhaltungen:
- EP-A- 1 002 980
- EP-A- 1 077 341
- WO-A-97/44186
- WO-A-99/57473

## Beschreibung

Die Erfindung betrifft ein mehrschichtiges Rohr bzw. Schlauch, insbesondere Kraftstoffrohr, mit mindestens einer Polyester-Barriereschicht und wenigstens einer weiteren Schutzschicht aus einer Polyethylenschicht, wobei die Barriereschicht und die Schutzschicht über wenigstens eine Haftvermittlerschicht verbunden sind, die aus einer Polyamid-Polyester-Zusammensetzung besteht.

Für die Verwendung einer Kraftstoffleitungsanlage eines Kraftfahrzeuges oder eines anderen Fahrzeuges sind verschiedene Arten von Schläuchen bekannt, die aus verschiedenen Materialien hergestellt werden können. Ein solcher Schlauch kann als Kraftstoffleitung selbst oder auch als Verbindungsstück zum Verbinden einer Kraftstoffleitung verwendet werden und flexibel oder starr ausgebildet sein. Im allgemeinen werden durch die Leitungen Benzin- oder Dieselkraftstoffe zum Motor gefördert, der Druckausgleich am und im Kraftstofftank gewährleistet, der Aktivkohlefilter an das Entlüftungssystem angeschlossen sowie dessen Regenerierung durch Kraftstoffabgabe vollzogen.

Im Hinblick auf die geltenden Umweltschutz- und Sicherheitsüberlegungen ist hierbei eine Anforderung an die Rohre bzw. Schlauche, dass die Permeation der gebräuchlichen Kraftstoffe durch Wandungen möglichst stark unterdrückt wird. Zu diesen Zweck hat es sich bewehrt eine Barriere- oder Sperrschicht in dem Schlauch anzuordnen, die diesen Sicherungsanforderungen Rechnung tragen. Hierbei haben sich zunehmend Rohre bewährt, die neben der Barriereschicht auch weitere Schichten, z.B. Schutzschicht und Haftvermittlerschicht aufweisen, um den Schlauch die notwendige Festigkeit und Beständigkeit zu verleihen.

Bei den Werkstoff für die Trägerschicht handelt es sich im allgemeinen um Polyamidwerkstoffe z.B. PA 11/12. Als nachteilig erweist sich bei diesen bekannten Kraftstoffleitungen, dass der Werkstoff der Trägerschicht hohe Kosten verursacht. Dies ist insbesondere für Tankentlüftungsleitungen von Relevanz, da diese zum einen relativ groß und lang dimensioniert sind, andererseits mechanisch und chemisch nur sehr gering beansprucht werden. Da Polyamide zudem nur eine relativ schlechte Sperrwirkung gegen Kraftstoffe aufweisen, liegt es nahe für diese - auf dem Tank befindlichen Leitungen - den gleichen Werkstoff als Trägermaterial zu wählen wie für den Tank selbst. Es bietet sich deshalb hierfür PE, insbesondere HDPE, an.

Aus der EP 1002980 ist ein Kraftstofftransportschlauch bekannt, der im Kontakt mit dem zu transportierenden Kraftstoff steht und welcher aus einem Polybutylterephthalat besteht, einer Außenschicht, die aus einem Polyamid oder einem Polyolefinharz gebildet ist, sowie eine die Innen- und Außenschicht miteinander verbindende Zwischenschicht. Diese Zwischenschicht, die als Hauptvermittlerschicht dient, kann unter anderem auch aus einer Mischung aus einem Polyester und einem Polyamid bestehen.

Aus der WO 9744186A ist ein mehrschichtiges Kohlenwasserstoffdampf undurchdringbares Rohr bekannt, bestehend aus einer Außenschicht, gebildet aus Nylon und einer inneren Sperrschicht, wobei die Außen- und Innenschicht über zwei Haftvermittlerschichten miteinander verbunden sind. Hierbei können die Haftvermittlerschichten gleiche oder voneinander verschiedene Klebstoffe enthalten. Die unterschiedlichen Klebstoffe können solchermaßen ausgewählt werden, dass die Adhäsion an der jeweilig benachbarten Innen- bzw. Außenschicht beschleunigt wird. Als Materialien für diese Klebstoffe werden hierbei thermische Fluorpolymere, Polyvinylverbindungen, umfassend Polyvinylfluorpolymere, Polyvinylfluoridpolymere und deren Mischungen vorgeschlagen.

Ferner ist aus der US 5 937 911 ein Kraftstoffförderschlauch bekannt, umfassend eine innere Schicht aus einem fluorhaltigen Harz, eine Zwischenschicht z.B. aus einem Polybutylenterephthalat, sowie einer äußeren Schicht, die aus einem Kautschuk- bzw. Gummimaterial hergestellt ist. Um eine ausreichende Haftfestigkeit zwischen den einzelnen Schichten sicherzustellen, ist es hierbei notwendig, durch Hitzebehandlung und Vulkanisation eine zusammenhängende Struktur der einzelnen Schichten zu bilden. Ein anderes Beispiel eines lediglich aus zwei Schichten aufgebauten Rohres ist in Beispiel Nr. 23, sowie Tabelle 11 beschrieben. Hierbei besteht die Außenschicht aus einem Polybutylenterephtalat und die innere Schicht wird aus Copolymer von Ethylen und Tetrafluorethylen gebildet. Zur Verbesserung der Haftfestigkeit wurde hierbei lediglich eine Oberflächenbehandlung der inneren Schichten durchgeführt. Die erzielten Ergebnisse zeigen hierbei eine sehr schlechte oder verhältnismäßig schlechte Ablösefestigkeit, die zu einer Ablösung oder Trennung der inneren und der äußeren Schicht führt.

Auch in der DE 42 14 383 ist die vorteilhafte Wirkung von Polyestern, z.B. PBT insbesondere ihre Sperrwirkung gegen reine Kohlenwasserstoffe als auch Alkohol und zugleich gegen ihre Gemische, wobei der Alkoholanteil über einen weiten Konzentrationsbereich variieren kann, beschrieben. Im Vergleich zu den bekannten in Kraftstoffleitungen eingesetzten Polyamiden, wie PA11 oder PA 12 weist Polyester jedoch eine geringere Hydrolysebeständigkeit auf, so dass dieses Material nicht als Monorohr verwendet werden kann, sondern hier als eine Schicht in einem Mehrschichtrohr eingesetzt werden kann.

In der DE 42 14 383 wird ein Kraftstoffrohr vorgeschlagen mit einer Polyesteraußenschicht, z.B. PBT, einer darauffolgenden Haftvermittlerschicht auf einem Polymer, insbesondere aus einem Polyurethan, sowie einer weiteren im Inneren des Rohres angeordneten Schicht, die bevorzugt aus Polyamid besteht. Die Haftvermittlerschicht ist in diesem Zusammenhang notwendig, da die Haftung zwischen Polyestern und Polyamiden häufig unzureichend ist. In diesem Zusammenhang ist es auch möglich, mehr als eine Haftvermittlerschicht zwischen der Innen- und Außenschicht anzuordnen. Ein Nachteil der Polyamidschicht ist es jedoch, dass dieses Material einerseits sehr teuer ist, andererseits aufgrund der bekannten Permeation der Kraftstoffe durch die Wandung und das damit verbundene Aufquellen, nicht zufriedenstellend ist. Zwar werden ein Teil dieser Nachteile durch die Verwendung einer PA-Schicht in einem Mehrschichtschlauch verbessert, häufig sind jedoch die zur Verbesserung der Haftfestigkeit zwischen den einzelnen Schichten wie in den Oberflächenbehandlungen sehr kompliziert und teuer, so dass die Gesamtkosten des Schlauches beträchtlich gesteigert werden.

Aufgabe der Erfindung ist es daher, ein mehrschichtiges Rohr bzw. Schlauch, insbesondere Kraftstoffrohr zur Verfügung zu stellen, dass in Bezug auf seine Beständigkeit gegen Kraftfahrstoffe ausgezeichnete Eigenschaften hat, ohne die Nachteile der bekannten Schläuche aufzuweisen.

Diese Aufgabe wird für ein mehrschichtiges Rohr bzw. Schlauch, insbesondere Kraftstoffrohr mit einer Polyester-Barriereschicht und wenigstens einer weiteren Schutzschicht aus einer Polyethylenschicht, wobei die Barriereschicht und die Schutzschicht über wenigstens eine Haftvermittlerschicht verbunden sind, die aus einer Polyamid-Polyester-Zusammensetzung besteht, dadurch gelöst, dass zwei Haftvermittlerschichten vorgesehen sind, wobei die zweite Haftvermittlerschicht zwischen der Schutzschicht und der ersten Haftvermittlerschicht angeordnet ist und aus einem copolymerisierten Polyethylen, insbesondere einem mit Maleinsäureanhydrid modifizierten HDPE besteht.

Es hat sich gezeigt, dass ein Mehrschichtrohr umfassend eine Polyesterbarriereschicht und eine Polyethylenschutzschicht ausgezeichnete Schwereigenschaften gegen Motorkraftstoffe besitzt. Durch die zwischen den beiden Schichten bereitgestellte Haftvermittlerschichten wird gewährleistet, dass eine ausreichende Verbindung der Schichten besteht. Hierbei hat sich insbesondere das Material der zweiten Haftvermittlerschicht als besonders geeignet erwiesen, eine gute Haftung zwischen der ersten Haftvermittlerschicht aus einer Polyamid-Polyesterzusammensetzung und der Polyethylenschicht zu gewährleisten.

Gemäß einer bevorzugten Ausführungsform kann die Polyester-Barriereschicht als Innenschicht im Rohr angeordnet sein. Da es sich erwiesen hat, dass insbesondere die Polyesterbarriereschicht eine ausgezeichnete Sperreigenschaft gegen reine Kohlenwasserstoffe als auch Alkohol aufweist, hat sich die Anordnung dieser Schicht, im direkten Kontakt mit dem Motorkraftstoff als besonders geeignet erwiesen.

Hierbei kann vorteilhafterweise die Polyester-Barriereschicht aus der Gruppe ausgewählt werden, bestehend aus Polyethylenterephthalat (PET), Polybutylenterephthalat (PBT), Polyethylennaphthalat (PEN) oder Polybutylennaphthalat. Besonders bevorzugt ist hierbei der Einsatz von Polybutylenterephtalat. Die oben genannten Polyester haben sich als besonders geeignet zur Verwendung in einem Kraftfahrstoffschlauch erwiesen.

Gemäß einer anderen Ausführungsform kann vorgesehen sein, dass zwei Haftvermittlerschichten vorgesehen sind. Durch den Einsatz zweier Haftvermittlerschichten ist es möglich, eine bessere Haftung der Schichten aneinander zu erzielen, da nicht eine Schicht ausgewählt werden muss, die sowohl mit der Innen- als auch mit der Außenschicht verträglich ist.

Vorteilhafterweise kann die Polyamid-Polyester-Zusammensetzung der ersten Haftvermittlerschicht aus einer Abmischung im Verhältnis von ungefähr 1:1 bestehen. Überraschenderweise hat es sich hierbei gezeigt, dass obwohl die Haftung zwischen Polyester und Polyamiden häufig unzureichend ist, eine Mischung der beiden Materialien vorteilhaft als Haftvermittlerschicht eingesetzt werden kann.

Gemäß einer anderen Ausführungsform können die Dicken der einzelnen Schichten, beispielhaft an einem 8 x1 mm Rohr dargestellt, wie folgt sein:
Innere Barriereschicht 0,4 mm, erste Haftvermittlerschicht 0,1 mm, zweite Haftvermittlerschicht 0,1 mm, äußere Schutzschicht 0,4 mm. Diese Schichtdicken haben sich im Einsatz als besonders geeignet erwiesen.

Die erfindungsgemäßen Mehrschichtrohre bzw. Schläuche zeichnen sich in vorteilhafter Weise durch eine besonders gute Verarbeitbarkeit der einzelnen Materialien für sich, sowie im Verbund auf, wie auch durch besonders gute Permeationseigenschaften, die für die heutigen Umweltschutz- und Sicherheitsbestimmungen ausreichend sind. Diese vorteilhaften Eigenschaften können erzielt werden mittels eines Rohrs, das in der Herstellung kostengünstig ist.

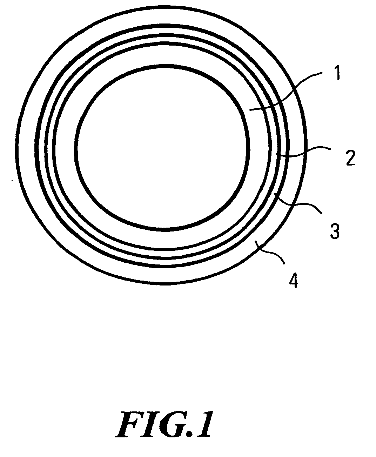

Die Erfindung wird nachstehend unter Bezugnahme auf die beigefügte Zeichnung näher erläutert. Die Figur zeigt eine Schnittzeichnung einer Ausführungsform der Erfindung in Form einer Tankentlüftungsleitung, die in einer Kraftstoffleitungsanlage eines Kraftfahrzeuges verwendet wird.

Das erfindungsgemäße Rohr besteht aus mehreren miteinander verbundenen Schichten. Im Inneren des Rohrs, in direkten Kontakt mit dem Kraftstoff ist eine Barriereschicht 1 angeordnet, bestehend aus Polybutylenterephthalat (PBT). Auf diese Barriereschicht folgt eine erste Haftvermittlerschicht 2 bestehend aus Polyamid-Polyesterzusammensetzung. An der Außenseite dieser ersten Haftvermittlerschicht 2 ist eine zweite Haftvermittlerschicht 3 angeordnet, die aus einem Maleinsäureanhydrid modifizierten HDPE gebildet wird. Die beiden aufeinander folgenden Haftschichten bieten den Vorteil einer dauerhaft besseren Haftung als bekannte Haftvermittler, die nur aus einer Schicht bestehen.

Die äußere Schicht wird von einer HDPE-Schicht bereitgestellt. Vorzugsweise sind die einzelnen Schichten so ausgebildet, dass die innere 1 und äußere Schicht 4 jeweils gleich dick ist, vorzugsweise mit einer Dicke von 0,4 mm ausgebildet sind und die einzelnen Haftvermittlerschichten die gleiche Dicke, vorzugsweise 0,1 mm betragen.

Das Rohr hat sich insbesondere für drucklose Anwendungen, insbesondere drucklose Tankentlüftungen als besonders geeignet erwiesen.

## Patentansprüche

1. Mehrschichtiges Rohr bzw. Schlauch, insbesondere Kraftstoffohr mit mindestens einer Polyester-Barriereschicht (1) über wenigstens einer weiteren Schutzschicht (4) aus einer Polyethylenschicht, wobei die Barriereschicht (1) und die Schutzschicht (4) über wenigstens eine Haftvermittlerschicht (2) verbunden sind, die aus einer Polyamid-Polyester-Zusammensetzung besteht, **dadurch gekennzeichnet, dass** zwei Haftvermittlerschichten (2, 3) vorgesehen sind, wobei die zweite Haftvermittlerschicht (3) zwischen der Schutzschicht (4) und der ersten Haftvermittlerschicht(2) angeordnet ist und aus einem copolymerisierten Polyethylen, insbesondere einem mit Maleinsäureanhydrid modifizierten HDPE besteht.

2. Mehrschichtiges Rohr bzw. Schlauch nach Anspruch 1, **dadurch gekennzeichnet, dass** die Schutzschicht (4) aus HDPE besteht.

3. Mehrschichtiges Rohr bzw. Schlauch nach Anspruch 1 oder 2, **dadurch gekennzeichnet, dass** die Polyester-Barriereschicht (1) als Innenschicht im Rohr angeordnet ist.

4. Mehrschichtiges Rohr bzw. Schlauch nach einem der Ansprüche 1 bis 3, **dadurch gekennzeichnet, dass** die Polyester-Barriereschicht (1) ausgewählt ist aus der Gruppe Polyethylenterephthalat (PET) Polybutylenterephthalat (PBT), Polyethylennaphthalat (PEN), Polybutylennaphthalat.

5. Mehrschichtiges Rohr bzw. Schlauch nach einem der Ansprüche 1 bis 4, **dadurch gekennzeichnet, dass** die Polyamid-Polyester-Zusammensetzung der ersten Haftvermittlerschicht (2) aus einer Abmischung im Verhältnis von ungefähr 1:1 besteht.

6. Mehrschichtiges Rohr bzw. Schlauch nach einem der Ansprüche 1 bis 5, **dadurch gekennzeichnet, dass** die innere Barriereschicht (1) und die äußere Schutzschicht (4) im wesentlichen die gleiche Dicke aufweisen und ein vielfaches dicker sind als jede der Haftvermittlerschichten (2, 3).

7. Mehrschichtiges Rohr bzw. Schlauch nach einem der Ansprüche 1 bis 6, **dadurch gekennzeichnet, dass** die Dicken der einzelnen Schichten, beispielhaft an einem 8x1 mm Rohr dargestellt, wie folgt sind: Innere Barriereschicht (1) 0,4 mm, erste Haftvermittlerschicht 1 (2) 0,1 mm, zweite Haftvermittlerschicht (2) 0,1 mm, äußere Schutzschicht (4) 0,4 mm.

## Claims

1. A multilayer pipe or hose, in particular a fuel pipe, comprising at least one polyester barrier layer (1) over at least one additional protective layer (4) consisting of a polyethylene layer, the barrier layer (1) and the protective layer (4) being interconnected via at least one adhesion promoter layer (2) which consists of a polyamide-polyester composition, **characterized in that** two adhesion promoter layers (2, 3) are provided, the second adhesion promoter layer (3) being arranged between the protective layer (4) and the first adhesion promoter layer (2) and consisting of a copolymerized polyethylene, in particular of a HDPE modified with maleic anhydride.

2. A multilayer pipe or hose according to claim 1, **characterized in that** the protective layer (4) consists of HDPE.

3. A multilayer pipe or hose according to claim 1 or 2, **characterized in that** the polyester barrier layer (1) is arranged as an interior layer within the pipe.

4. A multilayer pipe or hose according to one of the claims 1 to 3, **characterized in that** the polyester barrier layer (1) is selected from the group of polyethylene terephthalate (PET), polybutylene terephthalate (PBT), polyethylene naphthalate (PEN), polybutylene naphthalate.

5. A multilayer pipe or hose according to one of the claims 1 to 4, **characterized in that** the polyamide-polyester composition of the first adhesion promoter layer (2) consists of a mixture in a ratio of approx. 1:1.

6. A multilayer pipe or hose according to one of the claims 1 to 5, **characterized in that** the inner barrier layer (1) and the outer protective layer (4) have essentially the same thickness and are many times thicker than each of the adhesion promoter layers (2, 3).

7. A multilayer pipe or hose according to one of the claims 1 to 6, **characterized in that,** shown exemplarily in the case of an 8x1 mm pipe, the thicknesses of the individual layers are as follows: inner barrier layer (1) 0.4 mm, first adhesion promoter layer (1) 0.1 mm, second adhesion promoter layer (2) 0.1 mm, outer protective layer (4) 0.4 mm.

## Revendications

1. Tube ou tuyau multicouche, en particulier tube pour carburant, comprenant au moins une couche barrière en polyester (1) sur au moins une autre couche de protection (4) composée d'une couche de polyéthylène, la couche barrière (1) et la couche de protection (4) étant reliées par au moins une couche d'adhésif (2) qui se compose d'un composé polyamide-polyester, **caractérisé en ce qu'**il est prévu deux couches d'adhésif (2, 3), la seconde couche d'adhésif (3) étant disposée entre la couche de protection (4) et la première couche d'adhésif (2), et se composant d'un polyéthylène copolymérisé, en particulier d'un HDPE modifié par l'anhydride de l'acide maléique.

2. Tube ou tuyau multicouche selon la revendication 1, **caractérisé en ce que** la couche de protection (4) se compose de HDPE.

3. Tube ou tuyau multicouche selon la revendication 1 ou 2, **caractérisé en ce que** la couche barrière en polyester (1) est disposée comme couche intérieure dans le tube.

4. Tube ou tuyau multicouche selon l'une des revendications 1 à 3, **caractérisé en ce que** la couche barrière en polyester (1) est sélectionnée dans le groupe constitué par le polyéthylène téréphtalate (PET), le polybutylène téréphtalate (PBT), le polyéthylène naphtalate (PEN), le polybutylène naphtalate.

5. Tube ou tuyau multicouche selon l'une des revendications 1 à 4, **caractérisé en ce que** le composé polyamide-polyester de la première couche d'adhésif (2) se compose d'un mélange selon le rapport d'environ 1:1.

6. Tube ou tuyau multicouche selon l'une des revendications 1 à 5, **caractérisé en ce que** la couche barrière intérieure (1) et la couche de protection extérieure (4) ont sensiblement la même épaisseur et sont quatre fois plus épaisses que chacune des couches d'adhésif (2, 3).

7. Tube ou tuyau multicouche selon l'une des revendications 1 à 6, **caractérisé en ce que** les épaisseurs des couches individuelles, présentées à titre d'exemple sur un tube de 8x1 mm, sont les suivantes : couche barrière intérieure (1) 0,4 mm, première couche d'adhésif 1 (2) 0,1 mm, seconde couche d'adhésif (2) 0,1 mm, couche de protection extérieure (4) 0,4 mm.
